(19)

Europäisches
Patentamt
European
Patent Office
Office européen
des brevets

(11) **EP 1 006 717 B1**

(12) **EUROPEAN PATENT SPECIFICATION**

(45) Date of publication and mention
of the grant of the patent:
**02.01.2008 Bulletin 2008/01**

(51) Int Cl.:
***H04N 1/64*** (2006.01)

(21) Application number: **99309527.2**

(22) Date of filing: **29.11.1999**

(54) **Method and apparatus for segmenting data**

Verfahren und Vorrichtung zur Bildsegmentierung

Procédé et dispositif de segmentation d'image

(84) Designated Contracting States:
**DE FR GB**

(30) Priority: **02.12.1998 US 203870**
**07.12.1998 US 206487**
**07.12.1998 US 206488**
**21.12.1998 US 217138**

(43) Date of publication of application:
**07.06.2000 Bulletin 2000/23**

(73) Proprietor: **Xerox Corporation**
**Rochester,**
**New York 14644 (US)**

(72) Inventors:
• **de Queiroz, Ricardo L.**
**Pittsford, NY 14534 (US)**

• **Fan, Zhigang**
**Webster, NY 14580 (US)**
• **Tran, Trac D.**
**Columbia, MD 21044 (US)**

(74) Representative: **Skone James, Robert Edmund**
**Gill Jennings & Every LLP**
**Broadgate House**
**7 Eldon Street**
**London EC2M 7LH (GB)**

(56) References cited:
**EP-A- 0 239 936        US-A- 5 778 092**
**US-A- 5 861 960**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates generally to image processing and, more particularly, to techniques for compressing the digital representation of a document.

Documents scanned at high resolutions require very large amounts of storage space. Instead of being stored as is, the data is typically subjected to some form of data compression in order to reduce its volume, and thereby avoid the high costs associated with storing it. "Lossless" compression methods such as Lempel-Ziv Welch (LZW) do not perform particularly well on scanned pixel maps. While "lossy" methods such as JPEG work fairly well on continuous-tone pixel maps, they do not work particularly well on the parts of the page that contain text. To optimize image data compression, techniques, which can recognize the type of data being compressed, are needed.

The present invention is directed to segmenting color image data using the MRC format. Edges are generally defined as sharp discontinuities between regions of two constant colors or large sections of light intensity values. Here, edges of the image are separated into two portions. The foreground layer generally contains information about the darker sides, while the background layer contains the information about the smooth regions of the image and the brighter sides of the edges. Segmentation is performed by sectioning the image into stripes and (where the height of each stripe is equal to the size of the block) and processing each stripe block by block from the top of the image to the bottom.

US-A-5767978 describes an image segmentation system for differentially rendering black and white or colour images using different imaging techniques. The images are segmented according to different classes of region that are rendered.

In accordance with the present invention, a method of segmenting digital image data includes:

 a) acquiring a block of the digital image data, wherein the digital image data defines an array of pixels composed of light intensity signals in discrete locations corresponding to the pixels;
 b) calculating a threshold value ($t_s$) for said block; and
 c) generating a selector block which indicates which of said light intensity signals exceeds said threshold value and which of said light intensity signals is below said threshold value, and
 d) segmenting said light intensity signals in said block for placement on an upper plane and a lower plane based upon whether said signal value exceeds said threshold value ($t_s$), and is characterised in that said threshold calculating step includes selecting a value that will minimize a bit rate required to encode all blocks in said upper plane and said lower plane, and minimize an amount of distortion that will result from compressing said blocks using mixed raster content processing,

wherein said threshold value is that which minimizes the function R+KD, where R is a rate of encoding data for all planes, and D is a level of distortion generated by compressing said block using said threshold.

Some examples of methods according to the present invention will now be described with reference to the accompanying drawings, in which:-

 Figure 1 illustrates a composite image and includes an example of how such an image may be decomposed into three MRC image planes - an upper plane, a lower plane, and a selector plane;
 Figure 2 contains a detailed view of a pixel map and the manner in which pixels are grouped to form blocks;
 Figure 3 contains a flow chart which illustrates generally, the steps performed to practice an example of the invention;
 Figure 4 contains a detailed illustration of the manner in which blocks may be classified according to a comparative example;
 Figure 5 contains a detailed illustration of the manner in which blocks may be segmented based upon their classification; and,
 Figure 6 contains a detailed illustration on one manner of generating a selector plane.

The present invention is directed to a method and apparatus for separately processing the various types of data contained in a composite image. More specifically, the present invention is directed to generating a selector plane, one of several planes used during Mixed Raster Content (MRC) image processing, While the invention will described in a Mixed Raster Content (MRC) technique, it may be adapted for use with other methods and apparatus' for generating a bitmap and is not therefore, limited to MRC processing. The technique described herein is suitable for use in various devices required for storing or transmitting documents such as facsimile devices, image storage devices and the like, and processing of both color and grayscale black and white images are possible.

A pixel map is one in which each discrete location on the page contains a picture element or "pixel" that emits a light signal with a value that indicates the color or, in the case of gray scale documents, how light or dark the image is at that location. As those skilled in the art will appreciate, most pixel maps have values that are taken from a set of discrete, non-negative integers.

For example, in a pixel map for a color document, individual separations are often represented as digital values, often in the range 0 to 255, where 0 represents no colorant (i.e. when CMYK separations are used), or the lowest value in the range when luminance-chrominance separations are used, and 255 represents the maximum amount of colorant or the highest value in the range. In a gray-scale pixel map this typically translates to pixel values which range from 0, for black, to 255, for the whitest tone possible. The pixel maps of concern in the currently preferred embodiment of the present invention are representations of "scanned" images. That is, images which are created by digitizing light reflected off of physical media using a digital scanner. The term bitmap is used to mean a binary pixel map in which pixels can take one of two values, 1 or 0.

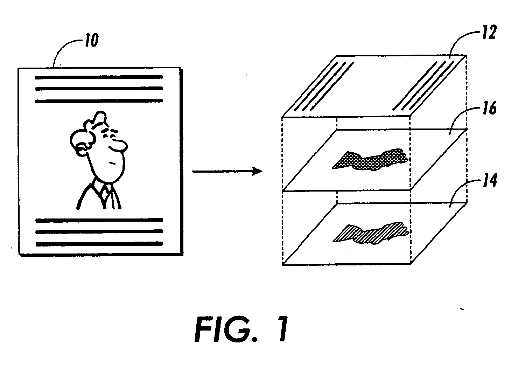

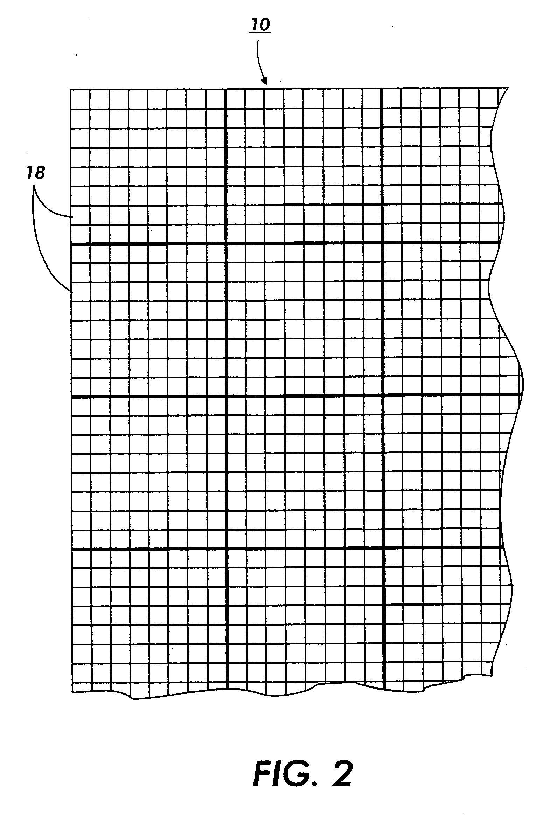

Turning now to the drawings for a more detailed description of the MRC format, pixel map 10 representing a color or gray-scale document is preferably decomposed into a three plane page format as indicated in Figure 1. Pixels on pixel map 10 are preferably grouped in blocks 18 (best illustrated in Figure 2), to allow for better image processing efficiency. The document format is typically comprised of an upper plane 12, a lower plane 14, and a selector plane 16. Upper plane 12 and lower plane 14 contain pixels that describe the original image data, wherein pixels in each block 18 have been separated based upon pre-defined criteria. For example, pixels that have values above a certain threshold may be placed on one plane, while those with values that are equal to or below the threshold are placed on the other plane. Selector plane 16 keeps track of every pixel in original pixel map 10 and maps all pixels to an exact spot on either upper plane 12 or lower plane 14.

The upper and lower planes are stored at the same bit depth and number of colors as the original pixel map 10, but possibly at reduced resolution. Selector plane 16 is created and stored as a bitmap. It is important to recognize that while the terms "upper" and "lower" are used to describe the planes on which data resides, it is not intended to limit the invention to any particular arrangement or configuration.

After processing, all three planes are compressed using a method suitable for the type of data residing thereon. For example, upper plane 12 and lower plane 14 may be compressed and stored using a lossy compression technique such as JPEG, while selector plane 16 is compressed and stored using a lossless compression format such as gzip or CCITT-G4. It would be apparent to one of skill in the art to compress and store the planes using other formats that are suitable for the intended use of the output document. For example, in the Color Facsimile arena, group 4 (MMR) would preferably be used for selector plane 16, since the particular compression format used must be one of the approved formats (MMR, MR, MH, JPEG, JBIG, etc.) for facsimile data transmission.

In the present invention digital image data is preferably processed using a MRC technique such as described above. Pixel map 10 represents a scanned image composed of light intensity signals dispersed throughout the separation at discrete locations. Again, a light signal is emitted from each of these discrete locations, referred to as "picture elements," "pixels" or "pels," at an intensity level which indicates the magnitude of the light being reflected from the original image at the corresponding location in that separation.

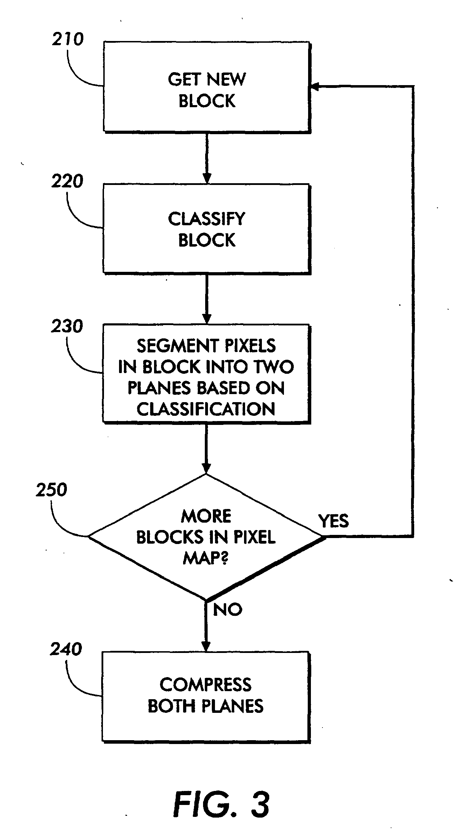

In typical MRC fashion, pixel map 10 must be partitioned into two planes 12 and 14. Figure 3 contains a schematic diagram, which outlines one process which may be used to segment pixel map 10 into an upper plane 12 and a lower plane 14 according to the present invention. While the invention will hereinafter be described with reference to this embodiment, it should be noted that the invention may be implemented in other methods as well. The present invention may be used in any image processing technique that requires use of a bitmap, especially, a bitmap that is associated with the original image.

A comparative example of the invention that will be described here, in the form of a method and apparatus for segmenting image data by classifying a block of data using several criteria and subsequently updating the classification considering the context of the data. As shown, block 18 is acquired as indicated in step 210, and is classified as indicated in step 220. In the preferred embodiment of the invention, block 18 will initially be classified as either UNIFORM, SMOOTH, WEAK_EDGE or EDGE, and is context - either TEXT or PICTURE - will be provided. The block will then be reclassified as either SMOOTH or EDGE, depending upon the initial classification and the context. Next, pixels in block 18 are segmented - placed on either upper plane 12 or lower plane 14 according to criteria that is most appropriate for the manner in which the block has been classified as indicated in step 230. This process is repeated for each block 18 in original pixel map 10 until the entire pixel map 10 has been processed. Upper plane 12, lower plane 14 and selector plane 16 are then separately compressed, using a technique that is most suitable for the type of data contained on each, as indicated in step 240.

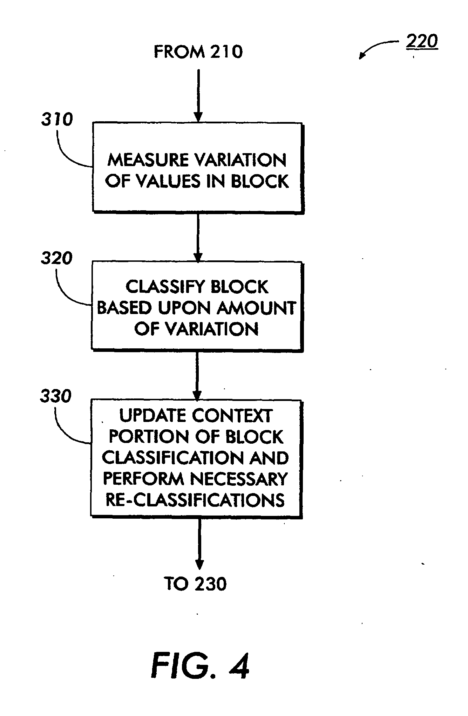

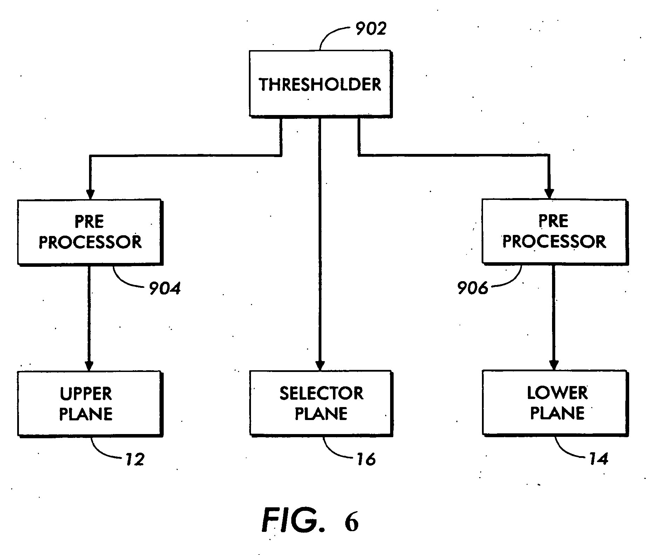

Turing now to Figure 4, for a continued explanation of the comparative example, classification of blocks 18 into one of the four categories in step 220 as described above is preferably completed in three steps. First, the variation of pixel values within the block is determined as indicated in step 310. Block variation is best determined by using statistical measures, which will be described in detail below with reference to Figure 6. Blocks with large variations throughout are most likely to actually lie along edges of the image, while those containing little variations probably lie in uniform or at least smooth areas. Measuring the variations within the block allows an initial classification to be assigned to it as indicated in step 320. Next, image data within each block 18 is reviewed in detail to allow context information (i.e. whether the region is in the text or picture region of the image) to be updated and any necessary block re-classifications to be performed as shown in step 330. The UNIFORM blocks are reclassified as SMOOTH, and the WEAK EDGE blocks are upgraded to EDGE in a TEXT context or reclassified as SMOOTH in a PICTURE context. A smoothed version 20 of the image is also provided by applying a low pass filter to the pixel map 10. Smoothed image 20 is used in conjunction with original image data to offer additional information during classification, and also provides unscreened data for halftone regions.

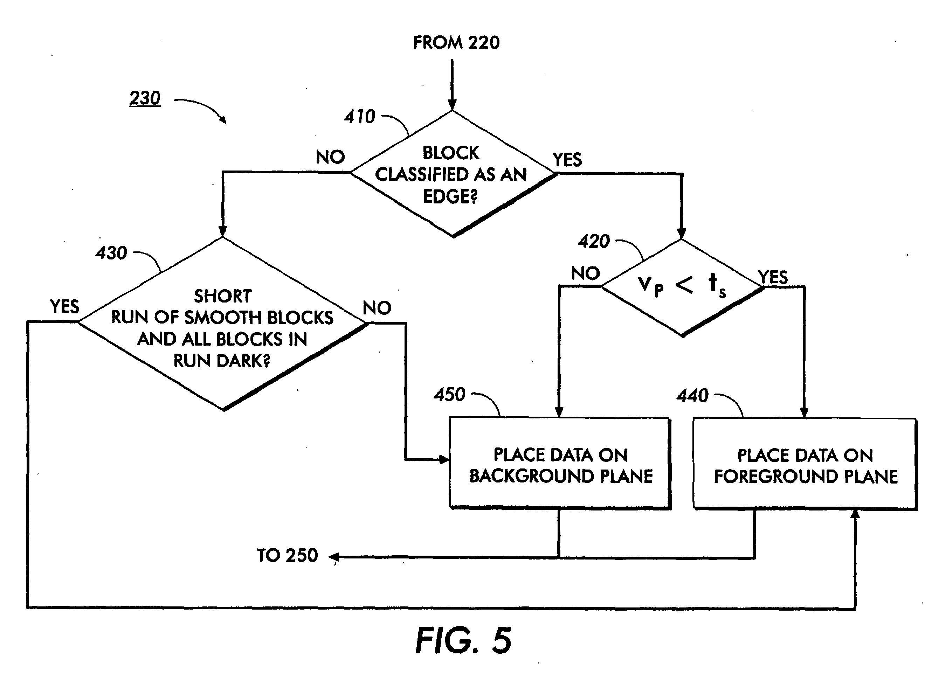

Figure 5 contains details of the manner in which block 18 is segmented into two planes, as provided in step 230 of Figure 3. The measurement begins by first determining at step 410 whether the block being processed has initially been classified as an EDGE in step 220. If so, the values $v_p$ of each pixel in the block are first compared to a brightness threshold value $t_s$, wherein pixels that have values equal to or above $t_s$ are viewed as "bright" pixels, while those with values below $t_s$ are "dark" pixels. Segmenting EDGE blocks simply includes placing dark pixels on upper plane 12 as indicated in step 440, and placing bright pixels on lower plane 14 as indicated in step 450. If it is determined at step 410 that block 18 is not an EDGE, all pixels in the block are processed together, rather than on a pixel by pixel basis. Segmenting of SMOOTH (non-EDGE) pixels occurs as follows: if block 18 is in the midst of a short run of blocks that have been classified as SMOOTH, and further, all blocks in this short run are dark ($v_p < t$) - all data in the block is placed on upper plane 12. If the entire block 18 is substantially smooth (i.e. in a long run) or is bright (in a short run of bright pixels), all data in block 18 is placed on lower plane 14.

As indicated earlier, selector plane 16 is generated as the pixels are placed on the upper and lower plane based upon the designated classification, to keep track of where every pixel in the original digital image data set resides. Turning to Figure 6, in accordance with the invention, selector plane 16 is generated without having to perform block classification. As shown, this embodiment of the invention includes a thresholder 902 and a pre-processor for each plane other than selector plane 16 that will be generated. As indicated earlier, the present invention will be described with reference to generating two planes in addition to selector plane 16. Thus, two pre-processors - pre-processor 904 for generating upper plane 12 and pre-processor 906 for generating lower plane 14 are shown.

A block which has the binary entries that are placed on selector plane 16 is found directly from block 18 by comparing the original pixels values to brightness threshold $t_s$. As shown in the illustration, block 18 is input to the thresholding block 902 which generates a selector block 916 for the portion of selector plane 16 that corresponds to block 18. Thresholding block 902 includes a threshold value. All pixel values in block 18 that are above this threshold value and designated to be placed on one plane, while values below the threshold are placed on the other plane. Zeros are placed in selector block 916 on the locations for which the pixel from block 18 has been placed on one plane. Ones are placed in selector block 18 where the pixel has been placed on the other plane.

Once thresholding has taken place, selector block 916 and block 18 are processed together in pre-processors 904 and 906. Pixels in block 18 that have not been selected by selector block 916 for placement on upper plane 12 are removed by pre-processor 904. Thus, for upper plane 12 preprocessor 904 will remove all the pixels in block 18 that match the position on selector block 916 that have been designated to be placed on lower plane 14. Similarly for lower plane 14, pre-processor 906 removes the pixels in block 18 which are associated, according to selector block 916, with upper plane 12. The removal of pixels is generally accomplished by substituting the values of those pixels by a predetermined value or by substituting the values of those pixels by values that are computed from existing pixels in block 18. Still referring to Figure 10, according to another embodiment of the present invention, the selection of brightness threshold $t_s$ is accomplished by analyzing the contents of the blocks that have already been processed and placed on upper plane 12, selector plane 16 and lower plane 14. More specifically, the analysis includes gathering the overall bit rate R and overall distortion D incurred by compressing the block using the multiplane approach. The bit rate R is related to the number of bits spent to encode the blocks for all planes, while the distortion D is the distortion incurred by compressing and decompressing all planes and reconstructing an approximation of the original block. The overall rate and distortion for a given block can be either precisely measured or simply estimated from the contents of the corresponding blocks in the upper, lower, and selector planes. In the invention, $t_s$ is selected such that the cost function $J = R + K D$ is minimized. The value of K can either be predetermined or computed from all values of R and D generated by $t_s$. As those skilled in the art will recognize, it may not be necessary to compute J for all values of $t_s$ if proper use of optimization and mathematical search techniques, which aim to track the minimum of a function without computing the function at all points, takes place. Note that if $t_s$ assumes the minimal or maximal values of the range of the image pixels, selector plane 16 will be uniform. In other words, no thresholding (i.e. all the pixels are associated with the upper or lower plane) is accomplished by setting $t_s$ to its extreme (i.e. maximum or minimum) values.

According to one embodiment of the invention, the overall bit rate R is defined as the sum of the rates of the three planes, wherein the bit rate achieved by compressing selector plane 16 is estimated from the number of horizontal transitions $N_t$ (from 1 to 0 and vice versa) found in the block.

According to another embodiment of the present invention, $t_a$, the average value of the pixel intensities of the block is computed. The variance $V_o$ of the original block is compared to the following cost function:

$$CF = a \, V_u + b \, V_l + c \, N_t$$

where a, b, c are predefined constants used to fine tune

the method, and $V_u$ and $V_l$ are the variances of the corresponding blocks (after thresholding and preprocessing) in the upper and lower planes, respectively. If $V_o >$ CF, then the threshold is set to $t_s = t_a$. Otherwise the threshold is set to one extreme value, e.g. $t_s=0$, $t_s=225$, so that the selector plane is uniform and all pixels in the input block are associated to the lower (upper) plane.

Again, the present invention is directed to segmenting the data by first identifying blocks that contain the edges of the image and then separating the blocks such that those which contain the smooth data and bright sides of the edges are placed on the lower plane and the dark sides of the edges are placed on the upper plane. Once each of the respective planes is generated, ordinary MRC processing continues. That is, each plane is compressed using an appropriate compression technique. In the currently preferred embodiment, upper plane 12 and lower plane 14 are compressed using JPEG while the selector plane 16 is compressed using a symbol based pattern matching technique such as CCITT Group IV or a method of classifying scanned symbols into equivalence classes such as that described in US-A 5,778,095 to Davies issued July 7, 1998. The planes are then joined together and transmitted to an output device, such as a facsimile machine or storage device.

In the preferred embodiment of the invention, any or all of these methods may be implemented in a computer any other device capable of storing a set of instructions which may be executed by a machine. The program storage device will tangibly embody this set of instructions (most often referred to as a software program) to perform the above previously recited steps for compressing a document image in the manner described in detail above with reference to the attached figures.

## Claims

1. A method of segmenting digital image data, the method comprising:

    a) acquiring (210) a block of the digital image data, wherein the digital image data defines an array of pixels composed of light intensity signals in discrete locations corresponding to the pixels;
    b) calculating a threshold value ($t_s$) for said block (16); and
    c) generating a selector block (16) which indicates which of said light intensity signals exceeds said threshold value and which of said light intensity signals is below said threshold value, and
    d) segmenting said light intensity signals in said block for placement on an upper plane (12) and a lower plane (14) based upon whether said signal value exceeds said threshold value ($t_s$),

characterised in that said threshold calculating step includes selecting a value that will minimize a bit rate required to encode all blocks in said upper plane (12) and said lower plane (14), and minimize an amount of distortion that will result from compressing said blocks using mixed raster content processing,
wherein said threshold value is that which minimizes the function R+KD, where R is a rate of encoding data for all planes, and D is a level of distortion generated by compressing said block using said threshold.

2. A method according to claim 1, wherein K is either a predetermined or computed value.

## Patentansprüche

1. Verfahren zur Segmentierung digitaler Bilddaten, wobei das Verfahren umfasst:

    a) Erfassen (210) eines Blockes der digitalen Bilddaten, wobei die digitalen Bilddaten eine Anordnung von Bildpunkten definieren, die aus Lichtintensitätssignalen an diskreten Stellen entsprechend den Bildpunkten bestehen;
    b) Berechnen eines Schwellenwertes ($t_s$) für diesen Block (16); und
    c) Erzeugen eines Selektorblocks (16), der anzeigt, welches der Lichtintensitätssignale den Schwellenwert überschreitet und welches der Lichtintensitätssignale unterhalb des Schwellenwertes liegt; und
    d) Segmentieren der Lichtintensitätssignale in dem Block zur Platzierung auf einer oberen Ebene (12) und einer unteren Ebene (14) basierend darauf, ob der Signalwert den Schwellenwert ($t_s$) überschreitet,

dadurch gekennzeichnet, dass der Schritt des Berechnens des Schwellenwertes das Auswählen eines Wertes umfasst, welcher eine Bitrate minimiert, die erforderlich ist, um alle Blöcke in der oberen Ebene (12) und der unteren Ebene (14) zu kodieren, und eine Größe der Verzerrung minimiert, die aus der Komprimierung der Blöcke unter Verwendung gemischter Rasterinhaltsverarbeitung resultiert,
wobei dieser Schwellenwert die Funktion R+KD minimiert, in der R eine Rate zur Kodierung von Daten für alle Ebenen ist, und D ein Grad der Verzerrung ist, die durch Komprimieren des Blocks unter Verwendung des Schwellenwertes erzeugt wird.

2. Verfahren nach Anspruch 1, wobei K entweder ein vorgegebener oder ein berechneter Wert ist.

**Revendications**

1.  Procédé de segmentation de données images numériques, le procédé comprenant :

    a) l'acquisition (210) d'un bloc des données images numériques, dans lequel les données images numériques définissent une matrice de pixels constitués de signaux d'intensité lumineuse à des emplacements discrets correspondant aux pixels ;
    b) le calcul d'une valeur seuil ($t_s$) pour ledit bloc (16) ; et
    c) la génération d'un bloc sélecteur (16) qui indique lequel desdits signaux d'intensité lumineuse dépasse ladite valeur seuil et lequel desdits signaux d'intensité lumineuse est au-dessous de ladite valeur seuil ; et
    d) la segmentation desdits signaux d'intensité lumineuse dans ledit bloc pour placement sur un plan supérieur (12) et un plan inférieur (14) sur la base du fait que ladite valeur de signal dépasse ou non ladite valeur seuil ($t_s$),

    **caractérisé en ce que** ladite étape de calcul de seuil comprend la sélection d'une valeur qui minimisera un débit binaire requis pour encoder tous les blocs dans ledit plan supérieur (12) et ledit plan inférieur (14), et minimisera une quantité de distorsion qui résultera de la compression desdits blocs en utilisant un traitement de contenu graphique en points mixte, dans lequel ladite valeur seuil est celle qui minimise la fonction R+KD, où R est un taux d'encodage de données pour tous les plans, et D est un niveau de distorsion généré en comprimant ledit bloc à l'aide dudit seuil.

2.  Procédé selon la revendication 1, dans lequel K est une valeur soit prédéterminée soit calculée.

**FIG. 1**

**FIG. 2**

210

GET NEW
BLOCK

220

CLASSIFY
BLOCK

230

SEGMENT PIXELS
IN BLOCK INTO TWO
PLANES BASED ON
CLASSIFICATION

250

MORE
BLOCKS IN PIXEL
MAP?

YES

NO

240

COMPRESS
BOTH PLANES

FIG. 3

FROM 210

_220_

310 MEASURE VARIATION
OF VALUES IN BLOCK

320 CLASSIFY BLOCK
BASED UPON AMOUNT
OF VARIATION

330 UPDATE CONTEXT
PORTION OF BLOCK
CLASSIFICATION AND
PERFORM NECESSARY
RE-CLASSIFICATIONS

TO 230

*FIG. 4*

EP 1 006 717 B1

FROM 220

230

410 — BLOCK CLASSIFIED AS AN EDGE?

NO

YES

430 — SHORT RUN OF SMOOTH BLOCKS AND ALL BLOCKS IN RUN DARK?

YES

NO

420 — $v_P < t_s$

NO

YES

450 — PLACE DATA ON BACKGROUND PLANE

440 — PLACE DATA ON FOREGROUND PLANE

TO 250

FIG. 5

*FIG. 6*

**EP 1 006 717 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5767978 A

- US 5778095 A, Davies